# EUROPÄISCHE PATENTSCHRIFT

(11) **EP 1 194 971 B1**
(45) Veröffentlichungstag und Bekanntmachung des Hinweises auf die Patenterteilung: **02.01.2008**
(21) Anmeldenummer: 00935003.4
(22) Anmeldetag: 10.05.2000
(51) Int. Cl.: H01M 8/06, H01M 8/24, H01M 8/00

(54) **BRENNSTOFFZELLEN-SYSTEM UND BRENNSTOFFZELLE FÜR DERARTIGES SYSTEM**
FUEL CELL SYSTEM AND FUEL CELL THEREFOR
SYSTEME DE PILES A COMBUSTIBLE ET PILE A COMBUSTIBLE POUR UN TEL SYSTEME

(30) Priorität: 11.05.1999 DE 19921816
(43) Veröffentlichungstag der Anmeldung: 10.04.2002
(60) Teilanmeldung: 03010499.6
(73) Patentinhaber: SFC Smart Fuel Cell AG, 85649 Brunnthal-Nord (DE)
(72) Erfinder: STEFENER, Manfred, D-80799 München (DE); PEINE, André, D-81369 München (DE); STIMMING, Ulrich, D-81479 München (DE)
(74) Vertreter: Grünecker, Kinkeldey, Stockmair & Schwanhäusser Anwaltssozietät
(86) Internationale Anmeldenummer: PCT/EP2000/004252
(87) Internationale Veröffentlichungsnummer: WO 2000/069011

(56) Entgegenhaltungen:
- EP-A- 0 700 107
- WO-A-96/23323
- DE-A- 19 833 064
- DE-C- 19 636 903
- US-A- 5 773 162
- US-A- 5 780 179
- US-A- 5 861 221
- US-A- 5 989 741
- PATENT ABSTRACTS OF JAPAN vol. 1998, no. 05, 30. April 1998 (1998-04-30) -& JP 10 012258 A (MITSUBISHI HEAVY IND LTD), 16. Januar 1998 (1998-01-16) -& DATABASE WPI Section Ch, Week 199813 Derwent Publications Ltd., London, GB; Class J04, AN 1998-136147 XP002147364 & JP 10 012258 A (MITSUBISHI JUKOGYO KK), 16. Januar 1998 (1998-01-16)

## Beschreibung

### Gebiet der Erfindung

Die Erfindung betrifft ein System zur Versorgung eines Verbrauchers mit elektrischer Energie mit einer Brennstoffzellenvorrichtung zur Erzeugung der elektrischen Energie, und einer Brennstoffbehältervorrichtung zur Aufnahme von der Brennstoffzellenvorrichtung zuführbarem Brennstoff.

### Stand der Technik

Systeme mit Brennstoffzellen der oben beschriebenen Art sowie Brennstoffzellen der oben beschriebenen Art für derartige Systeme sind im Stand der Technik bekannt.

Die bekannten Brennstoffzellen-Systeme beschränken sich im wesentlichen auf den Hochleistungsanwendungsbereich von mehreren kW. So findet man Brennstoffzellen-Systeme beispielsweise in der Automobilindustrie oder in der Kraftwerkstechnik.

Im Kleinleistungsbereich, d.h. der Größenordnung von bis zu 1 bis 2 kW, werden Brennstoffzellen als Alternative zu Batterien oder Akkus heutzutage noch kaum verwendet.
Dies liegt daran, daß bekannte Brennstoffzellen-Systeme, die als Batterie und Akkuersatz dienen sollen, schlechtere Eigenschaften als Batterien und Akkus aufweisen. Insbesondere können bekannte Brennstoffzellen-Systeme nicht die gleiche Laufzeit, die gleiche Sicherheit, eine vergleichbare Größe und ein vergleichbares Gewicht wie Batterien oder Akkus gewährleisten.

Während mit einer Brennstoffzelle Stromstärken von deutlich über 1A/cm² erzielt werden können, lassen sich mit einer einzelnen Brennstoffzelle in der Regel nur elektrische Spannungen im Bereich von 0.5 bis 0.7V im belasteten Zustand (1.2V im unbelasteten Zustand) erreichen. Da die meisten Kleingeräte jedoch eine wesentlich höhere Betriebsspannung erfordern, ist es notwendig mehrere Brennstoffzellen zu einer Brennstoffzellenvorrichtung zusammenzuschließen, um die erforderliche Spannung zur Verfügung stellen zu können.

Es ist bekannt mehrere Brennstoffzellen zu einer stapelförmigen Brennstoffzellenvorrichtung (Brennstoffzellenstack) zusammenzufassen. Die bekannten Brennstofrzellenstacks haben allerdings große Bauhöhen und komplexe Brennstoffzuführvorrichtungen, die einer Verwendung in Kleingeräten in der Regel entgegenstehen.

Außerdem ist es bekannt mehrere Brennstoffzellen in einer Ebene anzuordnen und miteinander zu verschalten. Beispielsweise offenbart die DE 196 36 903 eine derartige flächenförmige Anordnung. Die in dieser Druckschrift gezeigte Anordnung umfaßt eine Mehrzahl von Einzelzellen, die jeweils gasdicht in einem Gehäuse vorgesehen sind. Da bei einer Herstellung einer derartigen Brennstoffzelle die Mehrzahl der einzelnen Brennstoffzellen und die in ihrer Anzahl entsprechenden Mehrzahl der Dichtungen in dem Gehäuse positioniert werden müssen, ist die Herstellung einer derartigen Brennstoffzellenvorrichtung verhältnismäßig aufwendig und damit kostenintensiv.

Die DE 44 27 322 zeigt ein Modul mit einer Brennstoffzellenvorrichtung und einer Brennstoffbehältervorrichtung für ein Kfz. Das Modul kann schnell von einem technischen Laien in das Kfz eingebaut bzw. aus dem Kfz ausgebaut werden.

Angesicht der Nachteile des Standes der Technik liegt der Erfindung die Aufgabe zugrunde, die bekannten Brennstoffzellen-System zu verbessern.

### Beschreibung der Erfindung

Die zuvor genannte Aufgabe wird gelöst durch ein System mit den Merkmalen des Anspruchs 1.

Das System umfasst Kleingerate, wie beispielsweise tragbare Computer, elektrische Werkzeuge, elektrisch Haushaltsgeräte, elektrische Telekommunikationseinrichtungen, tragbare Fernseher, Videorecorder und dergleichen, ermöglicht.

In dem System muß sichergestellt werden, daß der Brennstoffzellenvorrichtung immer Brennstoff in ausreichender Konzentration zur Verfügung steht. Hierzu muß der Brennstoff in Kontakt mit der Elektrodenanordnung, bei Durchtritt von positiven Ionen durch den Elektrolyten der Anodenanordnung und bei Durchtritt von negativen Ionen durch den Elektrolyten der Kathodenanordnung der Brennstoffzellenvorrichtung, stehen.

Das System umfasst eine Pumpvorrichtung zur Unterstützung der Brennstoffzufuhr aus der Brennstoffbehältervorrichtung In die Brennstoffzellenvorrichtung vorgesehen werden. Durch eine derartige Pumpvorrichtung wird der Fluß unterstützt werden, sicherstellt, daß der Brennstoffzelle immer unverbrauchter Brennstoff zur Verfügung steht. Darüber hinaus unterstützt dieser Fluß auch das Abführen der Abfallprodukte.

Gemäß einer anderen Weiterbildung kann das System auch so ausgebildet sein, daß die Brennstoffzufuhr im wesentlichen durch die Pumpvorrichtung bewirkt wird. Hierbei kann durch gezielte Steuerung der Pumpvorrichtung die Energieversorgung gesteuert werden.

Vorteilhafterweise kann die Pumpvorrichtung in den beschriebenen Weiterbildungen in Form einer Miniaturpumpe ausgebildet sein. Durch diese Maßnahme kann die Baugröße des Systems klein gehalten werden.

Entsprechend einer besonders vorteilhaften Weiterbildung kann die Pumpvorrichtung derart regelbar ausgebildet sein, daß die der Brennstoffzellenvorrichtung zugeführte Brennstoffmenge eine konstante Ausgangsleistung der Brennstoffzellenvorrichtung bewirkt. Hierbei dienen wiederholte Messungen der Ausgangsleistung der Brennstoffzellenvorrichtung als Regelgröße.

Vorteil dieser Weiterbildung ist es, daß eine Energieversorgung eines Verbrauchers mit konstantem Strom und konstanter Spannung, also mit konstanter Leistung, möglich ist.

Entsprechend einer anderen Weiterbildung können die zuvor beschriebenen Brennstoffzellenvorrichtungen vorteilhafterweise als Methanol-Brennstoffzellenvorrichtung vorgesehen werden. Methanol-Brennstoffzellenvorrichtungen zeichnen sich insbesondere dadurch aus, daß ein flüssiger Brennstoff mit hoher Energiedichte verwendet wird, was zu einer kompakten Bauweise einer Methanol-Brennstoffzellenvorrichtung führt. In Methanol-Brennstoffzellen wird insbesondere ein Methanol-Wasser-Gemisch als Brennstoff der Anodeneinrichtung der Brennstoffzelle zugeführt. Der Kathodeneinrichtung wird ein Oxidans, beispielsweise Luft oder reiner Sauerstoff zugeführt. Als Abfallprodukte der Reaktionen in der Brennstoffzelle entstehen Kohlendioxid an der Anode und Wasserdampf an der Kathode.

Gemäß einer vorteilhaften Weiterbildung der Methanol-Brennstoffzellenvorrichtung kanneine Filtereinrichtung verwendet werden, die Kohlendioxid in ein in fester Phase vorliegendes Carbonat umwandelt. Insbesondere eignen sich hierzu Filtereinrichtungen, die Calziumcarbonat aufweisen.

Alternativ kann eine derartige Umwandlung vorteilhafterweise mit einem alkalischen lonentauscher, insbesondere einem alkalischen Ionentauscher auf Kunstharzbasis, beispielsweise einem Hydroxidionentauscher, durchgeführt werden.

Gemäß einer anderen bevorzugten Weiterbildung der zuvor beschriebenen Systeme kann die Brennstoffbehältervorrichtung zur Aufnahme von Methanol-Wasser-Gemisch, und eine Oxidationsmittelbehältervorrichtung zur Aufnahme eines Oxidationsmittels, beispielsweise reinem Sauerstoff oder Wasserstoffperoxid, vorgesehen sein. Durch diese Maßnahme kann das Brennstoffzellen-System als vollständig abgeschlossenes System, so wie eine Batterie oder ein Akku, betrieben werden.

Analog zu der Pumpvorrichtung auf der Brennstoffseite kann auch eine Pumpvorrichtung zur Unterstützung der Oxidationsmittelzufuhr aus der Oxidationsmittelbehältervorrichtung in die Brennstoffzellenvorrichtung vorgesehen werden.

Gemäß einer anderen Weiterbildung kann die Oxidationsmittelzufuhr vorteilhafterweise im wesentlichen durch die Pumpvorrichtung bewirkt werden. Wie im Fall der Pumpvorrichtung für den Brennstoff kann hierdurch eine gezielte Oxidationsmittelzufuhr zur Elektrodeneinrichtung der Brennstoffzellenvorrichtung gewährleistet werden.

Vorteilhafterweise kann die Pumpvorrichtung in Form einer Miniaturpumpe ausgebildet sein. Hierdurch ist wiederum eine kleine Baugröße bei hoher Funktionalität sichergestellt.

Ebenso wie die brennstoffseitige Pumpvorrichtung kann auch die oxidationsmittelseitige Pumpvorrichtung derart regelbar vorgesehen werden, daß die von der Pumpvorrichtung der Brennstoffzellenvorrichtung zugeführte Oxidationsmitteimenge eine konstante Ausgangsleistung der Brennstoffzellenvorrichtung sicherstellt, wobei die Ausgangsleistung der Brennstoffzellenvorrichtung als Regelgröße dient. Diese Ausführung kann alternativ zur oder zusammen mit der Regelung der brennstoffseitigen Pumpvorrichtung implementiert werden.

Die oben beschriebenen Systeme können entsprechend einer anderen Weiterbildung eine Ventilatoreinrichtung zur Zufuhr von Luftsauerstoff aus der Umgebung umfassen. Vorteil dieser Ausbildung ist es, daß die Umgebungsluft als Oxidationsmittel verwendet werden kann. Vorteilhaft ist weiterhin, daß die Größe des System wegen des Wegfalls der Oxidationsmittelbehältervorrichtung kleiner ausgebildet werden kann. Insgesamt kann so das System kleiner und kostengünstiger hergestellt werden. Da Luftsauerstoff verwendet wird, ist die Effizienz des Systems gegenüber einem mit reinem Sauerstoff-betriebenen System allerdings verringert. Die überschüssige sauerstoffarme Luft kann in dieser Weiterbildung an die Umgebung abgegeben werden.

In dem erfindungsgemäßen system sind die eigentlichen Verbrauchskomponenten des Systems austauschbar vorgesehen. Da einzelne Module relativ kostengünstig hergestellt werden können, kann mit diesen Modulen ein Verbraucher so wie mit Batterien oder mit einem Akku betrieben werden, d.h. wenn der Brennstoff verbraucht ist, kann ein frisches Modul eingesetzt werden. Darüber hinaus kann, da die Speicherkapazität einer Brennstoffzellenvorrichtung bezogen auf ihr Volumen erheblich höher als die einer Batterie oder eines Akkus ist, die Betriebsdauer der Brennstoffzellenvorrichtung bei gleicher Größe erhöht werden.

Die beschriebenen Brennstoffzellenvorrichtungen eignen sich insbesondere zur Abgabe einer Leistung von weniger als ungefähr einem kW.

Zur weiteren Erläuterung werden im folgenden bevorzugte Ausführungsformen der vorliegenden Erfindung unter Bezugnahme auf die beigefügte Zeichnung beschrieben. In der Zeichnung zeigen:
- Fig. 1: ein System zur Versorgung eines elektrischen Verbrauchers mit Energie zum besseren Verständung der vorliegenden Erfindung,
- Fig. 2: eine erste Ausführungsform des Systems zur Versorgung eines elektrischen Verbrauchers mit Energie gemäß der vorliegenden Erfindung,
- Fig. 3: ein weiteres System zur Versorgung eines elektrischen Verbrauchers mit Energie zum besseren Verständung der vorliegenden Erfindung,
- Fig. 4: eine zweite Ausfühungsform des Systems zur Versorgung eines elektrischen Verbrauchers mit Energie gemäß der vorliegenden Erfindung.

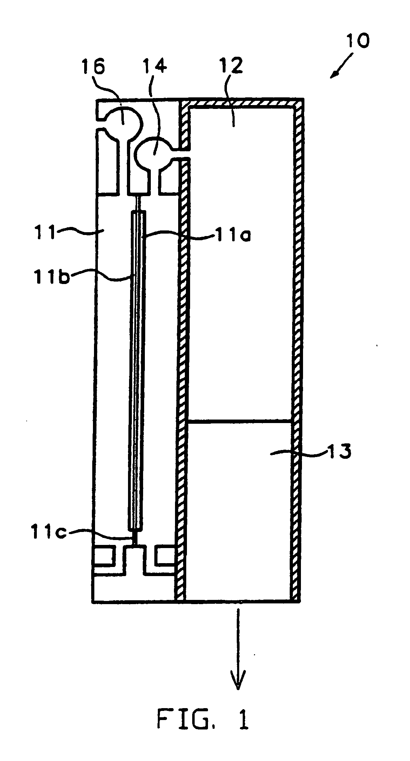

In Figur 1 ist ein System 10 zur Versorgung eines elektrischen Verbrauchers mit Energie zum besseren Verständung der Erfindung dargestellt. Die Darstellung des Systems ist, insbesondere in bezug auf die dargestellten Größenverhältnisse, lediglich schematisch zu verstehen.

Das System umfaßt eine Brennstoffzellenvorrichtung 11 zur Erzeugung der elektrischen Energie, eine Brennstoffbehältervorrichtung 12 zur Aufnahme des Brennstoffs und eine Entsorgungsvorrichtung 13 zur Entsorgung der durch den Betrieb der Brennstoffzelle entstehenden Abfallstoffe.

Die Brennstoffzellenvorrichtung 11 umfaßt einen Anodenbereich 11a, eine Elektrolyteinrichtung 11c, die für Ionen, insbesondere Protonen durchlässig und für Elektronen undurchlässig ist, und einen Kathodenbereich 11b. Der Anodenbereich und der Kathodenbereich können insbesondere durch eine Vielzahl von Anoden bzw. Kathoden ausgebildet sein, wie im Zusammenhang mit der Beschreibung der Figuren 5 bis 9 noch im Detail erläutert wird.

In Figur 1 ist ein System 10 dargestellt, in der dem Anodenbereich 11a ein Brennstoff zugeführt wird, der nicht vollständig umgesetzt wird, d.h. nach Umsetzung in Ionen, nicht vollständig durch die Elektrolyteinrichtung 11c in den Kathodenbereich 11 b gelangt. Demnach entstehen beim Betrieb der Brennstoffzelle im Anodenbereich 11a Abfallstoffe, die durch die Entsorgungseinrichtung 13, die in der vorliegenden Ausführungsform als Filtereinrichtung ausgebildet ist, entsorgt werden.

Durch eine Pumpvorrichtung 14 wird die Brennstoffzufuhr aus der Brennstoffbehältervorrichtung 12 in die Brennstoffzellenvorrichtung 11 bewirkt.

Dem Kathodenbereich 11 b wird in der dargestellten Ausführungsform ein Oxidationsmittel zugeführt. Beim Betrieb der Brennstoffzelle reagiert das Oxidationsmittel mit den Brennstoffkomponenten, die durch die Elektrolyteinrichtung 11c in den Kathodenbereich gelangt sind. Die dargestellte Ausführungsform eignet sich insbesondere, wenn hierbei im Kathodenbereich unschädliche Stoffe entstehen, die ohne Gefahr an die Umgebungsluft abgegeben werden können.

Ein Beispiel für eine Brennstoffzellenvorrichtung der zuvor beschriebenen Art ist eine Methanol-Brennstoffzellenvorrichtung. Als Brennstoff wird hierbei ein Methanol-Wasser-Gemisch verwendet. Als Oxidationsmittel wird dem Kathodenbereich Sauerstoff beispielsweise in Form von Umgebungsluft zugeführt. Hierzu wird ein Ventilator 16, oder alternativ eine Pumpvorrichtung, verwendet.

Bedingt durch einen Katalysator reagiert das Methanol in dem Methanol-Wasser-Gemisch im Anodenbereich 11a zu Protonen, Kohlendioxid und Elektronen. Die Protonen wandern durch die protonendurchlässige Membran 11c, die beispielsweise aus Nafion gebildet sein kann, in den Kathodenbereich 11 b und reagieren dort mit Sauerstoffionen aus der Umgebungsluft, die durch einen Katalysator ioninsiert worden sind. Als Abfallprodukt entsteht hierbei Wasserdampf, der zusammen mit dem unverbrauchten Teil der Luft an die Umgebung abgegeben wird.

Die bei der Reaktion entstehenden Elektronen werden vom Anodenbereich zum Kathodenbereich in Form von elektrischem Strom geführt.

Das im Anodenbereich entstandene Kohlendioxid wird zusammen mit dem Wasser aus dem Anodenbereich in die Filtereinrichtung 13 gespült. Dieser Prozeß wird, wie die Brennstoffzufuhr in die Brennstoffzellenvorrichtung durch die Pumpvorrichtung 14 unterstützt.

In der Filtereinrichtung 13 wird das Kohlendioxid zu Carbonat umgewandelt. In der dargestellten Ausführungsform wird ein Calziumdioxid-Filter verwendet, in dem das Kohlendioxid unter Bildung von Wasser zu Calziumcarbonat umgewandelt wird.

Alternativ zur Filtereinrichtung kann auch eine lonentauschereinrichtung, insbesondere eine alkalische lonentauschereinrichtung auf Kunstharzbasis, verwendet werden. Hierzu eignet sich beispielsweise eine Kunstharzmatrix, an der Hydroxidionen angelagert sind. In einer derartigen Ionentauschereinrichtung wird das Kohlendioxid unter Bildung von Wasser in Calziumcarbonat umgewandelt, das sich an der Matrix anlagert.

Das bei der Filterung entstandene Wasser wird zusammen mit dem unverbrauchten Teil des Methanol-Wasser-Gemisches wieder in die Brennstoffbehältervorrichtung 12 geführt.

Im fortwährenden Betrieb wird somit das Methanol in dem Methanol-Wasser-Gemisch umgesetzt, wodurch sich die Konzentration des Methanols in dem Methanol-Wasser-Gemisch bis auf einen Wert verringert, bei dem die oben beschriebene Reaktion nicht mehr effizient durchgeführt werden kann. Durch die Entsorgung des bei der Reaktion entstandenen Kohlendioxids wird zum anderen die Filtereinrichtung zugesetzt. Zweckmäßigerweise werden demnach der zur Verfügung gestellte Brennstoff und die Filtereinrichtung so dimensioniert, daß das Erreichen des Konzentrationswerts und das Zusetzen der Filtereinrichtung zur gleichen Zeit eintreten.

In Figur 1 sind die Brennstoffbehältervorrichtung 12 und die Filtereinrichtung 13 in Form eines Moduls ausgebildet, während die Brennstoffzellenvorrichtung, die Pumpvorrichtungen, die Ventilatorvorrichtung sowie die nicht näher bezeichneten Zu- und Abführkanäle verbraucherseitig vorgesehen sind. Dieses Modul kann, wie durch den Pfeil in Figur 1 angedeutet aus dem Verbraucher herausgezogen und wiederaufbereitet werden. Hierzu wird in die Brennstoffbehältervorrichtung Brennstoff gefüllt und die Filtereinrichtung oder die Ionentauschereinrichtung wird auf chemischem oder physikalischem Weg in ihren ursprünglichen Zustand gebracht oder vollständig ausgetauscht.

In der dargestellten Ausführungsform sind für einen 10 stündigen Betrieb eines Verbrauchers mit 20 Watt etwa 5ml Methanol erforderlich. Bei einer Konzentration von 4 Vol.-% Methanol im Methanol-Wasser-Gemisch sind demnach etwa 125ml Brennstoffgemisch erforderlich.

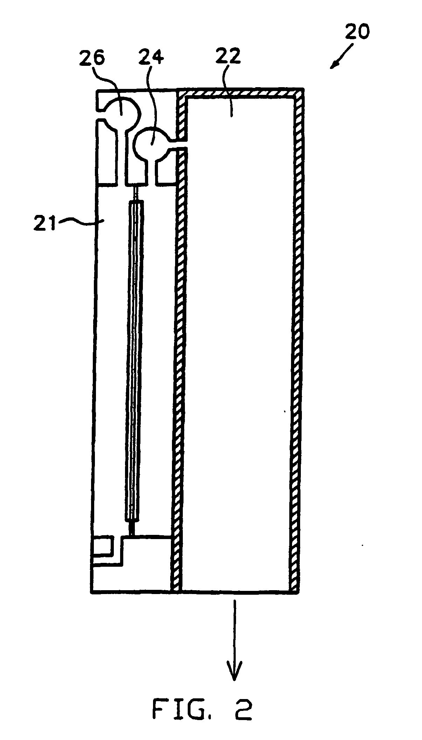

In Figur 2 ist eine Ausführungsform eines erfindungsgemäßen Systems 20 zur Versorgung eines elektrischen Verbrauchers mit Energie dargestellt. Die Darstellung des Systems ist, insbesondere in bezug auf die dargestellten Größenverhältnisse, lediglich schematisch zu verstehen. Im folgenden wird zur Vermeidung von Wiederholungen nur auf die Unterschiede zu dem in Figur 1 dargestellten System eingegangen und bezüglich der übrigen Komponenten auf die entsprechende Beschreibung von Figur 1 verwiesen. Hierbei unterscheiden sich die Bezugszeichen, mit denen einander entsprechende Komponenten bezeichnet sind, jeweils durch die erste Ziffer.

Wesentlicher Unterschied zwischen dem System 20 und dem System 10 ist es, daß das System 20 für Brennstoffe vorgesehen ist, die vollständig verbrannt werden. Demnach entstehen in dem System 20 anodenseitig keine Abfallstoffe. Folglich besitzt der Anodenbereich 21 b keinen Abfluß und keine Entsorgungsvorrichtung.

Die in Figur 2 dargestellte Brennstoffzellenvorrichtung kann in Form einer Wasserstoff-Brennstoffzellenvorrichtung realisiert werden. In einer derartigen Vorrichtung wird der Anode Wasserstoff zugeführt, der mittels eines Katalysators vollständig in Protonen umgesetzt wird. Diese Protonen gelangen durch die protonendurchlässige Membran in den Kathodenbereich. Im Kathodenbereich wird, ebenfalls mittels eines Katalysators, Sauerstoff aus der Umgebungsluft in Sauerstoffionen umgesetzt. Die Sauerstoffionen reagieren schließlich mit den Protonen zu Wasserdampf. Die bei diesen Reaktionen entstehenden Elektronen werden als Strom abgeführt.

Das aus dem System entfernbare Modul wird in der in Figur 2 dargestellten Ausführung durch die Brennstoffbehältervorrichtung 22 gebildet.

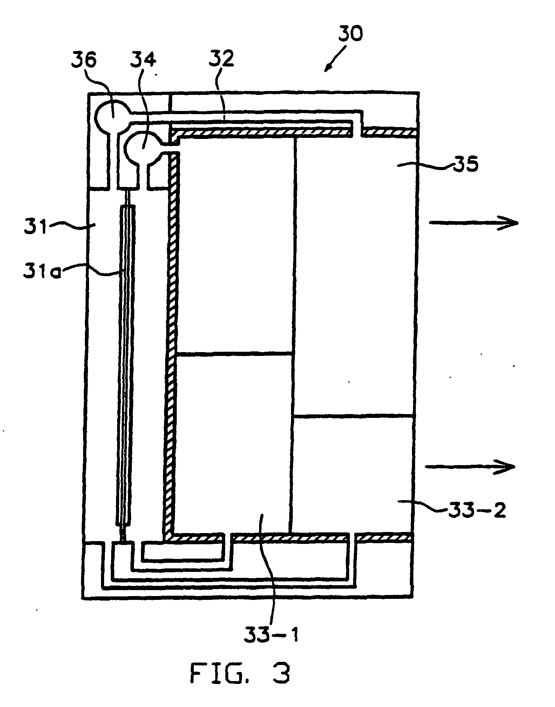

In Figur 3 ist ein System 30 zur Versorgung eines elektrischen Verbrauchers mit Energie zum besseren Verständung der Erfindung dargestellt. Die Darstellung des Systems ist, insbesondere in bezug auf die dargestellten Größenverhältnisse, lediglich schematisch zu verstehen. Das System 30 ist dem in Figur 1 dargestellten System 10 ähnlich. Deshalb wird im folgenden zur Vermeidung von Wiederholungen nur auf die Unterschiede zu dem in Figur 1 dargestellten System eingegangen und bezüglich der übrigen Komponenten auf die entsprechende Beschreibung von Figur 1 verwiesen. Hierbei unterscheiden sich die Bezugszeichen, mit denen einander entsprechende Komponenten bezeichnet sind, jeweils durch die erste Ziffer.

Das System gemäß Figur 3 unterscheidet sich von dem System nach Figur 1 dadurch, daß das Oxidationsmittel nicht aus der Umgebungsluft entnommen wird und daß die Abfallprodukte auf der Kathodenseite nicht an die Umgebung abgegeben werden. Demnach eignet sich dieses System insbesondere für Brennstoffe, deren Umsetzung umweltbelastende Abfallstoffe nach sich zieht.

Das Oxidationsmittel wird in einer Oxidationsmittelbehältervorrichtung 35 zur Verfügung gestellt. Von dort gelangt es über eine Pumpvorrichtung 36 in den Kathodenbereich 31a der Brennstoffzellenvorrichtung 31. Die Abfallprodukte dieses Prozesses werden über eine Abführleitung in die Entsorgungseinrichtung 33 geführt. Die Entsorgungsvorrichtung 33 umfaßt eine lonenaustauschereinrichtung 33-1 und eine Aufnahmeeinrichtung 33-2.

Die Pumpvorrichtung 36 ist in dieser Ausführungsform regelbar ausgebildet, und zwar so daß die der Brennstoffzellenvorrichtung zugeführte Brennstoffmenge eine konstante Ausgangsleistung der Brennstoffzellenvorrichtung 31 bewirkt. Als Regelgröße wird die von der Brennstoffzellenvorrichtung 31 abgegebene Leistung verwendet. Hierbei werden durch ein Meßeinrichtung (nicht gezeigt) fortwährend Messungen der Ausgangsleistung der Brennstoffzellenvorrichtung durchgeführt und in Abhängigkeit von der gemessenen Leistung die Pumprate erhöht oder erniedrigt.

Als Beispiel für eine derartige Brennstoffzellenvorrichtung kann wiederum eine Methanol-Brennstoffzellenvorrichtung herangezogen werden.

Als Oxidationsmittel wird hierbei mittels einer Pumpvorrichtung 36, die in Form einer Mikropumpe ausgebildet ist, reiner Sauerstoff aus der Oxidationsmittelbehältervorrichtung 35 in den Kathodenbereich zugeführt. Demnach entsteht kathodenseitig lediglich Wasserdampf als Abfallprodukt. Der entstandene Wasserdampf wird über eine Leitung in die Aufnahmeeinrichtung 33-2 geführt und dort gesammelt. Anodenseitig entsteht in dem System 30 Kohlendioxid als Abfallprodukt, das in einer lonenaustauschereinrichtung 33-1, wie oben beschrieben, unter Bildung von Wasser zu Calziumcarbonat umgewandelt wird. Das hierbei entstehende Wasser wird schließlich in die Brennstoffbehältervorrichtung 32 geführt.

Vorteil des System 30 gegenüber dem System 10 ist es, daß keine Abfallstoffe an die Umwelt abgegeben werden und daß durch Verwendung von reinem Sauerstoff eine effizientere Energieerzeugung stattfinden kann.

Das aus dem System entfernbare Modul wird in der in Figur 3 dargestellten Ausführung durch die Brennstoffbehältervorrichtung 32, die lonenaustauschereinrichtung 33-1, die Aufnahmeeinrichtung 33-2 und die Oxidationsmittelbehältervorrichtung 35 gebildet.

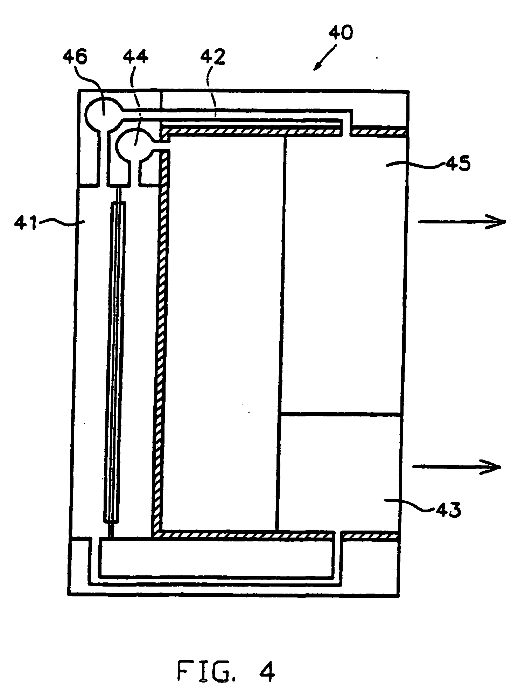

In Figur 4 ist eine Ausführungsform eines erfindungsgemäßen Systems 40 zur Versorgung eines elektrischen Verbrauchers mit Energie dargestellt. Die Darstellung des Systems ist, insbesondere in bezug auf die dargestellten Größenverhältnisse, lediglich schematisch zu verstehen. Das System 40 ist den in Figur 2 und in Figur 3 dargestellten Systemen 20 und 30 ähnlich. Deshalb wird im folgenden zur Vermeidung von Wiederholungen nur auf die Unterschiede zu den in Figur 2 und in Figur 3 dargestellten Systemen eingegangen und bezüglich der übrigen Komponenten auf die entsprechende Beschreibung von Figur 2 und Figur 3 verwiesen. Hierbei unterscheiden sich die Bezugszeichen, mit denen einander entsprechende Komponenten bezeichnet sind, jeweils durch die erste Ziffer.

Das System 40 wird, wie das System 20 in Figur 2, mit einem Brennstoff betrieben, der anodenseitig vollständig umgesetzt wird. Demnach entstehen anodenseitig keine Abfallstoffe, und als Folge hiervon sind anodenseitig weder ein Abfluß noch eine Entsorgungsvorrichtung vorgesehen. Im übrigen liegen keine Unterschiede zwischen dem System 30 und 40 vor.

Zum Betrieb des Systems 40 eignet sich, analog zum Betrieb des Systems 20 in Figur 2, insbesondere Wasserstoff. Der Wasserstoff wird anodenseitg ohne Abfallprodukte in Protonen umgesetzt. Diese Protonen wandern durch die Elektrolyteinrichtung und reagieren auf der Kathodenseite, der aus der Oxidationsmittelbehältervorrichtung 45 reiner Sauerstoff zugeführt wird, mit katalysierten Sauerstoffionen zu Wasserdampf. Dieser Wasserdampf kann über eine Kondensatoreinrichtung zu Wasser kondensiert werden und dann in der Aufnahmeeinrichtung 43 gesammelt werden.

Das aus dem System entfernbare Modul wird in der in Figur 4 dargestellten Ausführung durch die Brennstoffbehältervorrichtung 42, die Aufnahmeeinrichtung 43 und die Oxidationsmittelbehältervorrichtung 45 gebildet.

In den in den Figuren 1 bis 4 dargestellten Ausführungsformen wurden protonendurchlässige Elektrolyten verwendet. In Abhängigkeit von dem verwendeten Brennstoff lassen sich allerdings auch andere Elektrolyteinrichtungen, die für positive oder negative Ionen durchlässig sind, verwenden.

Es bleibt anzumerken, daß der Brennstoff bei Verwendung von Elektrolyteinrichtungen, die für negative Ionen durchlässig sind, der Kathode zuzuführen ist. Bei einem Brennstoff, der vollständig umgesetzt wird, fallen demnach alle Abfallprodukte anodenseitig an.

Im übrigen lassen sich alle dem Fachmann auf dem Gebiet der Brennstoffzellen bekannten Ausführungen der Anodeneinrichtungen, der Kathodeneinrichtungen, der Elektrolyteinrichtungen, der Katalysatoren, und sonstiger Materialien für die Brennstoffzellenvorrichtungen in dem oben beschriebenen Ausführungen einsetzen.

## Patentansprüche

1. System (20), umfassend:
einen Verbraucher elektrischer Energie in Form eines Kleingeräts im Leistungsbereich bis zu 2 kW,
eine Brennstoffzellenvorrichtung (21) zur Erzeugung der elektrischen Energie für den Verbraucher,
eine Brennstoffbehältervorrichtung (22) zur Aufnahme von der Brennstoffzellenvorrichtung zuführbarem flüssigem Brennstoff mit hoher Energiedichte,
eine Pumpvorrichtung (24) zur Unterstützung der Brennstoffzufuhr,
wobei die Brennstoffzellenvorrichtung verbraucherseitig vorgesehen ist, und
die Brennstoffbehältervorrichtung als Modul ausgebildet ist, das in den Verbraucher zur Energieversorgung einsetzbar ist und nach Verbrauch des Brennstoffs aus dem Verbraucher entfernbar ist.

2. System nach Patentanspruch 1, in welchem die Brennstoffzellenvorrichtung zur Abgabe einer Leistung von bis zu 1 kW ausgebildet ist.

3. System nach Anspruch 1 oder 2, in welchem die Pumpvorrichtung verbraucherseitig vorgesehen ist, vorzugsweise als Miniaturpumpe.

4. System nach einem der Ansprüche 1 bis 3, in welchem die Brennstoffzufuhr im Wesentlichen durch die Pumpvorrichtung (24) bewirkt wird.

5. System nach einem der Ansprüche 1 bis 4, in welchem die Pumpvorrichtung (24) derart regelbar ist, dass die von der Pumpvorrichtung (24) der Brennstoffzellenvorrichtung (21) zugeführte Brennstoffmenge eine konstante Ausgangsleistung der Brennstoffzellenvorrichtung (21) bewirkt, wobei die Ausgangsleistung der Brennstoffzellenvorrichtung als Regelgröße dient.

6. System nach einem der Ansprüche 1 bis 5 mit einer verbraucherseitig vorgesehenen Pumpvorrichtung (26), vorzugsweise einer Miniaturpumpe, zur Unterstützung der Oxidationsmittelzufuhr in die Brennstoffzellenvorrichtung (21).

7. System nach Anspruch 6, in welchem die Oxidationsmittelzufuhr im Wesentlichen durch die Pumpvorrichtung bewirkt wird.

8. System nach Anspruch 6 oder 7, in welchem die Pumpvorrichtung (26) derart regelbar ist, dass die von der Pumpvorrichtung (26) der Brennstoffzellenvorrichtung (21) zugeführte Oxidationsmittelmenge eine konstante Ausgangsleistung der Brennstoffzellenvorrichtung (21) bewirkt, wobei die Ausgangsleistung der Brennstoffzellenvorrichtung als Regelgröße dient.

9. System nach einem der Ansprüche 6 bis 8, in welchem die Pumpvorrichtung (26) in Form einer Ventilatoreinrichtung zur Zufuhr von Luftsauerstoff aus der Umgebung ausgebildet ist.

## Claims

1. System (20), comprising:
a consumer of electrical energy in the form of a small apparatus in the power range of up to 2 kW,
a fuel cell device (21) for generating electrical power for the consumer,
a fuel tank device (22) for receiving liquid fuel with a high energy density that can be supplied to the fuel cell device,
a pump device (24) for supporting the fuel supply,
wherein the fuel cell device is provided on the consumer side, and
the fuel tank device is formed as a module that can be installed into the consumer for energy supply and which after consumption of the fuel can be removed from the consumer.

2. A system as claimed in claim 1, in which the fuel cell device is designed to output a power of up to 1 kW.

3. A system as claimed claim 1 or 2, in which the pump device is provided on the consumer side, preferably as a miniature pump.

4. A system as claimed in one of claims 1 to 3, in which the fuel supply is substantially effected by the pump device (24).

5. A system as claimed in one of claims 1 to 4, in which the pump device (24) is controllable such that the fuel quantity supplied by the pump device (24) to the fuel cell device (21) effects a constant output power of the fuel cell device (21), wherein the output power of the fuel cell device serves as control variable.

6. A system as claimed in one of claims 1 to 5, comprising a pump device (26), preferably a miniature pump provided on the consumer side, to support the oxidizing agent supply into the fuel cell device (21).

7. A system as claimed in claim 6 in which the oxidizing agent supply is substantially effected by the pump device.

8. A system as claimed in claim 6 or 7, in which the pump device (26) can be controlled such that the oxidizing agent quantity supplied by the pump device (26) to the fuel cell device (21) effects a constant output power of the fuel cell device (21), wherein the output power of the fuel cell device serves as a control variable.

9. A system as claimed in one of claims 6 to 8, in which the pump device (26) is designed in the form of a ventilator means for supplying oxygen from the atmosphere.

## Revendications

1. Système (20), comportant :
- un consommateur d'énergie électrique sous la forme d'un petit appareil dans le domaine de puissance allant jusqu'à 2 kW,
- un dispositif de piles à combustible (21) pour générer l'énergie électrique pour le consommateur,
- un réservoir de combustible (22) destiné à recevoir le combustible liquide à densité énergétique élevée, à acheminer vers le dispositif de piles à combustible (21),
- un dispositif de pompage (24) destiné à favoriser l'acheminement de combustible,
- le dispositif de piles à combustible (21) étant prévu du côté consommateur, et
- le réservoir de combustible étant réalisé sous la forme d'un module, qui peut être inséré dans le consommateur pour une alimentation en énergie et être retiré hors du consommateur une fois que le combustible a été consommé.

2. Système selon la revendication 1, dans lequel le dispositif de piles à combustible est réalisé pour fournir une puissance allant jusqu'à 1 kW.

3. Système selon la revendication 1 ou 2, dans lequel le dispositif de pompage est prévu du côté consommateur, de préférence sous la forme d'une pompe miniature.

4. Système selon l'une quelconque des revendications 1 à 3, dans lequel l'acheminement de combustible est essentiellement effectué par le dispositif de pompage (24).

5. Système selon l'une quelconque des revendications 1 à 4, dans lequel le dispositif de pompage (24) est réglable de telle sorte que la quantité de combustible acheminée depuis le dispositif de pompage (24) vers le dispositif de piles à combustible (21) engendre une puissance de sortie constante du dispositif de piles à combustible (21), la puissance de sortie du dispositif de piles à combustible (21) étant utilisée en tant que grandeur de réglage.

6. Système selon l'une quelconque des revendications 1 à 5, comportant un dispositif de pompage (26) prévu du côté consommateur, de préférence une pompe miniature, destinée à favoriser l'admission d'oxydants dans le dispositif de piles à combustible (21).

7. Système selon la revendication 6, dans lequel l'admission d'oxydants est essentiellement produite par le dispositif de pompage.

8. Système selon la revendication 6 ou 7, dans lequel le dispositif de pompage (26) est réglable de telle sorte que la quantité d'oxydants acheminée depuis le dispositif de pompage (26) vers le dispositif de piles à combustible (21) engendre une puissance de sortie constante du dispositif de piles à combustible (21), la puissance de sortie du dispositif de piles à combustible (21) étant utilisée en tant que grandeur de réglage.

9. Système selon l'une quelconque des revendications 6 à 8, dans lequel le dispositif de pompage (26) est réalisé sous la forme d'un ventilateur destiné à acheminer l'oxygène de l'air provenant de l'environnement.
